# EUROPÄISCHE PATENTSCHRIFT

(11) **EP 0 296 148 B1**
(45) Veröffentlichungstag und Bekanntmachung des Hinweises auf die Patenterteilung: **12.05.1993**
(21) Anmeldenummer: 88890144.4
(22) Anmeldetag: 13.06.1988
(51) Int. Cl.: C01G 9/06

(54) **Verfahren zur Herstellung einer lagerbaren Zinksulfathydratmischung aus Hexahydrat und Heptahydrat**
Process for the preparation of a mixture of zinc sulfate hydrate containing hexahydrate and heptahydrate which can be conserved
Procédé de préparation d'un mélange d'hydrates de sulfate de zinc conservable contenant de l'hexahydrate et de l'héptahydrate

(30) Priorität: 19.06.1987 AT 1560/87
(43) Veröffentlichungstag der Anmeldung: 21.12.1988
(73) Patentinhaber: CHEMSON POLYMER-ADDITIVE GESELLSCHAFT M.B.H., 9601 Arnoldstein (AT)
(72) Erfinder: Fritz, Peter, Dr., A-9601 Arnoldstein (AT); Six, Gerd, A-9601 Arnoldstein (AT)
(74) Vertreter: Collin, Hans, Dipl.-Ing. Dr.

(56) Entgegenhaltungen:
- US-A- 1 922 902
- US-A- 2 557 326
- NOVEAU TRAITE DE CHIMIE MINERALE, P. PASCAL, Tone V, Masson & Cie, 1962

## Beschreibung

Die Erfindung betrifft ein Verfahren zur Herstellung einer lagerbaren, sowie silier- und dosierfähigen Zinksulfathydratmischung aus Hexahydrat und Heptahydrat, in der vorzugsweise der Hexahydratanteil überwiegt.

Zinksulfat ist das wichtigste Zinksalz und stellt unter anderem das Ausgangsprodukt für die Herstellung anderer Zinksalze oder Zinkverbindungen sowie zinkhaltiger Substanzen, wie Lithopone, dar. Es ist ein großtechnisches Produkt und wird als solches u. a. in Fällbädern bei der Kunstfaserherstellung, als Belzmaterial und zum Beschweren in der Textilindustrie, als Konservierungsmittel in Schlichten und Appreturflotten, als Spurenelementlieferant in Dünge- und Futtermitteln, als Flotationshilfe in der Erzaufbereitung, in Verzinkungsbädern, zur Klärung und Aufhellung von Leim und Gelatine sowie in der Medizin als Adstringens, Desinfiziens und Brechmittel eingesetzt.

Das Zinksulfat kristallisiert in einer Hydratreihe mit 1, 2, 3, 5, 6 und 7 Molekülen Kristallwasser; als technische Produkte kommen das Heptahydrat ZnSO₄.7H₂O und das Monohydrat ZnSO₄.H₂O zur Anwendung.

In der US-PS 1 922 902 ist angegeben, daß Zinksulfat für Handelszwecke üblicherweise entweder als Hepta- oder Hexahydrat angeboten wird; dies entspricht nicht den heutigen Gegebenhelten, die Herstellung von Hexahydrat hat technisch niemals praktische Bedeutung erlangt. In dieser Druckschrift ist angegeben, daß es möglich ist, Zinksulfathydrat jeder gewünschten Bruttozusammensetzung zu erhalten, das praktisch mutterlaugefrei ist und sich trocken anfühlt. Dies erfolgt durch Bildung einer pastenförmigen Aufschlämmung von Zinksulfatmonohydratteilchen in einer konzentrierten Zinksulfatlösung, Aufbringen der Aufschlämmung auf einer bewegten Oberfläche, Abkühlen des Produktes und Zerkleinern des verfestigten Produktes zu Schuppen. In diesen Schuppen liegt eine Konglomerat aus Hydratkristallen verschiedener Zusammensetzung vor.

Die Herstellung dieses bekannten Produkts ist aufwendig, insbesondere muß dazu vorher Monohydrat gebildet werden. Ein weiterer Nachteil dieses Verfahrens ist die praktische Unmöglichkeit, damit Produkte gleichbleibender Zusammensetzung zu erhalten.

Herstellungstechnisch und reinheitsmäßig ist das Heptahydrat das bevorzugte Produkt; das Monohydrat wird entweder durch Entwässerung aus dem Heptahydrat hergestellt oder durch besondere Behandlung einer Zinksulfatlösung, aus der sonst üblicherweise das Heptahydrat auskristallisieren gelassen wird, nämlich Kristallisation unter Anwendung besonderer Konzentrations- und Temperaturbedingungen bzw. besonderer Trocknungsverfahren. Das Monohydrat ist aber bezüglich verschiedener Einsatzgebiete nicht verwendbar, weil es beim Auflösen in Wasser zu einer nachteiligen Hitzeentwicklung führt (positive Lösungswärme); zum Unterschied vom generell einsetzbaren Heptahydrat. Weiters nachteilig am Monohydrat ist ein Gehalt an unlöslichen Verbindungen; Monohydrat löst sich niemals klar in Wasser auf.

Gegenüber dem Monohydrat, das rieselfreudig und lagerstabil ist, weist aber das Heptahydrat den Nachteil einer starken Agglomerationsneigung bereits bei Zimmertempteratur auf, d. h. das Produkt ist nicht lange lagerbar und backt letztlich zusammen, obwohl das Heptahydrat anscheinend an sich nicht hygroskopisch ist. Hiefür dürften Mutterlaugenreste verantwortlich sein. Oberhalb von etwa 40 C spaltet das Heptahydrat weiters Kristallwasser ab, das sich aber nicht verflüchtigt, sondern das Produkt anlöst. Bei der Rekristallisation (beim Abkühlen) entsteht dabei eine feste Masse, der sogenannte Zinksulfatstein, der nur mehr durch Grobbrechen und Auflösen in Wasser verwendbar gemacht werden kann.

Weiters kann Heptahydrat wegen seines niedrigen Schmelzpunktes nicht gemahlen werden, um bei Bedarf niedrigere Korngrößen zur Verfügung stellen zu können.

Es mußte beim sonst bevorzugten Heptahydrat also dessen geringe Lagerbarkeit in Kauf genommen werden. Somit werden Heptahydratgebinde nur bis max. 50 kg Inhalt hergestellt und ein Automatikbetrieb bei der Verarbeitung in Form einer Silolagerung mit dosierter Förderung ist nicht möglich.

Es bestand somit die Aufgabe, ein Zinksulfathydrat-Produkt zu schaffen, das weder die nachteiligen Eigenschaften des Heptahydrates noch des Monohydrates aufweist.

Es wurde nun überraschenderweise gefunden, daß Heptahydrat/Hexahydratmischungen, die bis zu 40 Gew-% Heptahydrat enthalten können, ein lagerstabiles, rieselfähiges und gut dosierbares Produkt bilden, das universell einsetzbar ist, ohne die oben angegebenen Nachteile, und daß derartige Mischungen großtechnisch überaus einfach herstellbar sind.

Das erfindungsgemäße Verfahren zur Herstellung dieses Produktes ist vor allem dadurch gekennzeichnet, daß aus einer Zinksulfatlösung, gegebenenfalls nach insbesondere in Vakuum erfolgender Einengung, etwa im Bereich der Umwandlungstemperatur Heptahydrat/Hexahydrat, vorzugsweise zwischen etwa 39° und 41°C, Feststoffe auskristallisiert und bei dieser Temperatur aus der Lösung abzentrifugiert werden, und daß dem so erhaltenen Produkt aus Hexahydrat und Heptahydrat, wobei vorzugsweise der Hexahydratanteil überwiegt, gegebenenfalls feinteilige Kieselsäure zugemischt wird.

Eine Zumischung von feinteiliger Kieselsäure zu diesem Produkt kann für verschiedene Zwecke vorteilhaft sein, z.B. für extrem lange Verweilzeiten in Silos. Vorteilhaft werden dem Produkt 0,5 bis 1 Masse-% feinteilige Kieselsäure zugemischt.

Nach einem weiteren besonders vorteilhaften Kennzeichen des erfindungsgemäßen Verfahrens wird das abzentrifugierte Produkt als in sich bewegte Phase einer Nachreifung zur Umwandlung von Flüssiganteilen in Feststoffe unterworfen.

Diese Nachreifung kann isotherm durchgeführt werden, vorteilhaft aber während der natürlichen Abkühlung auf Raumtemperatur.

Ein Vorteil dieses Verfahrens besteht darin, daß Konzentration (im Vakuum), Kristallisation und Zentrifugieren innerhalb eines engen Temperaturintervalls stattfindet und bei niedrigem Temperaturniveau.

Mit dem erfindungsgemäßen Verfahren können völlig gleichmäßig kristallisierte Produkte vorher wählbarer Zusammensetzung erhalten werden, die eine deutliche Unterscheidung zu mechanischen Mischungen verschiedener Hydrate oder zu nachgetrocknetem Heptahydrat zulassen.

Die Erfindung wird nachfolgend anhand von Beispielen näher erläutert.

### Beispiel 1:

Eine Zinksulfatlösung wird unter Vermeidung von Kristallbildung auf ein spezifisches Gewicht von 1.55 kg/l konzentriert und dann auf 40°C abgekühlt. Der entstehende Kristallbrei wird mittels einer Zentrifuge in Salz und Filtrat getrennt, wobei das Filtrat mit 39°C aus der Zentrifuge abgenommen wird. Die abgetrennten Kristalle werden unmittelbar nach Erhalt über eine Schüttelrinne geführt, auf der die Kristalle gegeneinander bewegt werden und sich anhaftende Mutterlauge durch Kristallisation verfestigt oder Lösungsflüssigkeit verdunstet, wobei eine langsame Abkühlung erfolgt. Die Abnahme von der Schüttelrinne erfolgt nach Abkühlung auf etwa Raumtemperatur; günstig sollte eine Abkühlung um mindestens 10°C gegenüber der Ausbringtemperatur aus der Zentrifuge erfolgt sein, bevor die Gegeneinanderbewegung der Kristalle beendet wird.

Das erhaltene Produkt ist trocken und rieselfreudig mit folgenden Eigenschaften:

### Produktbeschreibung:

- Zinkgehalt: über 24 %
- Schüttgewicht: 1,076 kg/l
- Kristallform: Prismen mit im wesentlichen glatter glänzender Oberfläche, kleiner als 2 mm
- Temperaturbeständigkeit: bis 75°C

Aus dem Zinkgehalt ergibt sich, daß das Produkt im wesentlichen aus Hexahydrat besteht (Zinkgehalt Hexahydrat 24,3 %, Zinkgehalt Heptahydrat 22,8 %).

### Beispiel 2:

Eine Zinksulfatlösung wird wie in Beispiel 1 hergestellt und dann auf 39°C abgekühlt. Der entstehende Kristallbrei wird mittels einer Zentrifuge in Salz und Filtrat getrennt, wobei das Filtrat mit 38°C aus der Zentrifuge abgenommen wird. Die abgetrennten Kristalle werden unmittelbar nach Erhalt durch eine Mischtrommel mit geneigter Achse geführt, in der sie gegeneinander bewegt werden und sich anhaftende Mutterlauge durch Kristallisieren verfestigt oder Lösungsflüssigkeit verdunstet, wobei eine langsame Abkühlung erfolgt. Die Abnahme von der Mischtrommel erfolgt nach Abkühlung auf etwa Raumtemperatur; günstig sollte eine Abkühlung um mindestens 15°C gegenüber der Ausbringtemperatur aus der Zentrifuge erfolgt sein, bevor die Gegeneinanderbewegung der Kristalle beendet wird.

Das erhaltene Produkt ist trocken und rieselfreudig mit folgenden Eigenschaften:
- Zinkgehalt: 23,6 %
- Schüttgewicht: 0,97 kg/l
- Kristallform: Nadeln mit im wesentlichen glatter Oberfläche
- Temperaturbeständigkeit: bis etwa 50°C

Aus dem Zinkgehalt ergibt sich, daß das Produkt je etwa zur Hälfte aus Hexaund Heptahydrat besteht.

Ein Vergleich der Produkte der Beispiele 1 und 2 zeigt, daß neben der Temperaturbeständigkeit auch die Rieselfähigkeit des Produkts nach Beispiel 2 gegenüber der des Produkts nach Beispiel 1 verschlechtert ist.

Die Mutterlaugen werden unter Erwärmen, vorzugsweise um etwa 10°C über die Umwandlungstemperatur Heptahydrat/Hexahydrat, wieder auf die gewünschte Dichte konzentriert und wieder in das Verfahren eingesetzt, so daß das Verfahren kontinuierlich betrieben werden kann. Durch genaue Steuerung der Kristallisationsendtemperatur (Zentrifugenfiltrattemperatur) kann die Produktzusammensetzung vorbestimmt werden.

Mit den erfindungsgemäßen Zinksulfathydratmischungen können somit die Vorteile des Heptahydrats bei Ausschaltung von dessen Nachteilen beibehalten werden.

Es ergeben sich herstellungsseitig insbesondere die Vorteile geringer Herstellungskosten, hoher Reinheit und des Abpackens von Großgebinden infolge der Rieselfreudigkeit und Lagerstabilität der Produkte.

Verbraucherseitig sind wiederum der Erhalt definierter Produkte und deren günstige Verarbeitbarkeit (Silolagerung, automatische Förderung und Dosierung) bei günstigen Preisen wesentliche Vorteile, ebenso verringerte Leargebindeprobleme.

## Patentansprüche

1. Verfahren zur Herstellung eines rieselfähigen, lagerstabilen Zinksulfathydratprodukts, dadurch gekennzeichnet, daß aus einer Zinksulfatlösung, gegebenenfalls nach insbesondere im Vakuum erfolgender Einengung, etwa im Bereich der Umwandlungstemperatur Heptahydrat/Hexahydrat, vorzugsweise zwischen etwa 39° und 41°C, Feststoffe auskristallisiert und bei dieser Temperatur aus der Lösung abzentrifugiert werden, und daß dem so erhaltenen Produkt aus Hexahydrat und Heptahydrat, wobei vorzugsweise der Hexahydratanteil überwiegt, gegebenenfalls feinteilige Kieselsäure zugemischt wird.

2. Verfahren nach Anspruch 1, dadurch gekennzeichnet, daß das abzentrifugierte Produkt als in sich bewegte Phase einer Nachreifung zur Umwandlung von Flüssiganteilen in Feststoffe unterworfen wird.

3. Verfahren nach Anspruch 2, dadurch gekennzeichnet, daß die Nachreifung unter Abkühlung vorgenommen wird.

4. Verfahren nach einem der Ansprüche 1 bis 3, dadurch gekennzeichnet, daß ein Produkt mit 10-20 Gew.-% Heptahydratgehalt, bezogen auf die Gesamtmasse des Produkts, gebildet wird.

5. Verfahren nach einem der Ansprüche 1 bis 4, dadurch gekennzeichnet, daß dem Produkt 0,5 bis 1 Masse-% feinteilige Kieselsäure zugemischt wird.

6. Rieselfähiges, lagerstabiles Zinksulfathydratprodukt bestehend aus einer Heptahydrat/Hexahydratmischung, die bis zu 40 Gew.-% Heptahydrat enthält.

## Claims

1. A process for the production of a free-flowing zinc sulphate hydrate product stable in storage, characterized in that solids are crystallized out of a zinc sulphate solution, optionally after concentration in particular in vacuo, approximately in the temperature range of heptahydrate/hexahydrate conversion, preferably between about 39°C and 41°C, and are centrifuged off the solution at this temperature, and that optionally fine-particle silicic acid is admixed to the product of hexahydrate and heptahydrate thus obtained, the hexahydrate portion preferably being preponderant.

2. The process according to claim 1, characterized in that the product centrifuged off is subjected to postripening in the form of a phase moving in itself in order to convert liquid portions into solids.

3. The process according to claim 2, characterized in that postripening is carried out under cooling.

4. The process according to any of claims 1 to 3, characterized in that a product having a heptahydrate content of 10 to 20 percent by weight, on the basis of the total weight of the product, is formed.

5. The process according to any of claims 1 to 4, characterized in that 0,5 to 1 percent by mass of fine-particle silicic acid is admixed to the product.

6. Free-flowing zinc sulphate hydrate product stable in storage, consisting of a heptahydrate/hexahydrate mixture containing up to 40 percent by weight of heptahydrate.

## Revendications

1. Processus de production d'un produit d'hydrate de sulfate de zinc, coulant librement et étant stable en stockage, characterisé en ce que des matières solides sont séparées à l'état cristallin d'une solution de sulfate de zinc, le cas échéant après concentration qui s'effectue en particulier sous vide, environ dans la gamme de temperature de conversion heptahydrate/hexahydrate, préférablement entre 39° et 41°C environ, et sont éliminées de la solution par centrifugation à cette temperature, et en ce que, le cas écheant, de l'acide silicique en particules fines est mélangé avec le produit d'hexahydrate et d'heptahydrate ainsi obtenu, la portion d'hexahydrate étant préférablement prédominant.

2. Processus selon la revendication 1, characterisé en ce que le produit éliminé par centrifugation est soumis à un post-murissement pour la conversion de portions liquides en matières solides comme phase mouvante en soi.

3. Processus selon la revendication 2, characterisé en ce que le post-murissement est effectué sous refroidissement.

4. Processus selon l'une des revendications 1 à 3, characterisé en ce qu'un produit avec une teneur d'heptahydrate de 10-20 % en poids, relative à la masse totale du produit, est formé.

5. Processus selon l'une des revendications 1 à 4, characterisé en ce que 0,5 à 1 % en masse d'acide silicique en particules fines est mélangé avec le produit.

6. Produit d'hydrate de sulfate de zinc coulant librement et étant stable en stockage, consistant en un mélange heptahydrate/hexahydrate, comprenant jusqu'au 40 % en poids d'heptahydrate.
